# EUROPEAN PATENT APPLICATION

(11) **EP 4 696 818 A1**
(43) Date of publication of application: **18.02.2026**
(21) Application number: 25195194.3
(22) Date of filing: 11.08.2025
(51) Int. Cl.: C25D 5/56, C25D 7/06, H01M 4/66, H01M 10/0562, C23C 18/16, C25D 3/56

(54) **COMPOSITE SUBSTRATE FOR ALL-SOLID-STATE BATTERY AND ALL-SOLID-STATE BATTERY INCLUDING THE SAME**

(30) Priority: 13.08.2024 KR 20240108512
(71) Applicant: SAMSUNG SDI CO., LTD., Yongin-si, Gyeonggi-do 17084 (KR)
(72) Inventor: KWON, Minseok, 17084 Gyeonggi-do (KR); KIM, Suhyun, 17084 Gyeonggi-do (KR); LEE, KyuSeo, 17084 Gyeonggi-do (KR); CHA, Jungwook, 17084 Gyeonggi-do (KR); LEE, Wonhyung, 17084 Gyeonggi-do (KR); KANG, Dayoung, 17084 Gyeonggi-do (KR)
(74) Representative: Michalski Hüttermann & Partner Patentanwälte mbB

(57) **Abstract**

Disclosed are composite substrates, negative electrodes, and all-solid-state batteries. The composite substrate includes a polymer layer, a first nickel alloy layer on a first surface of the polymer layer, and a second nickel alloy layer on a second surface of the polymer layer. At least one of the first and second nickel alloy layers includes a nickel-iron binary alloy.

## Description

### CROSS-REFERENCE TO RELATED APPLICATION

This application claims priority under 35 U.S.C § 119 to Korean Patent Application No. 10-2024-0108512 filed on August 13, 2024 in the Korean Intellectual Property Office, the disclosure of which is hereby incorporated by reference in its entirety.

### BACKGROUND

The present disclosure relates to a composite substrate for an all-solid-state battery, and an all-solid-state battery including the composite substrate.

There are high-energy density and safe batteries that respond to current industrial demands. For example, lithium ion batteries are commercialized not only in formation-related and communication devices, but also in the automotive industry. In the automotive industry, safety is emphasized due to its direct relation to human lives.

Currently available lithium ion batteries contain an electrolyte with a flammable organic solvent, and thus there is a possibility of overheating and fire when a short circuit occurs. Accordingly, there are all-solid-state batteries in which liquid electrolyte are replaced with solid electrolytes. As all solid-state batteries do not use flammable organic dispersion mediums, the possibility of fire or explosion may be significantly reduced even in the event of short-circuits. Therefore, compared to lithium ion batteries that use electrolyte solutions, such all solid-state batteries may have substantially increased safety.

### SUMMARY

An example embodiment of the present disclosure includes a composite substrate with desired or improved resistance to sulfation and improved high-temperature lifespan characteristics for an all-solid-state battery and a negative electrode including the same.

An embodiment of the present disclosure provides an all-solid-state battery with desired or improved resistance to sulfation and improved high-temperature lifespan characteristics.

According to an example embodiment of the present disclosure, a composite substrate for an all-solid-state battery may include a polymer layer, a first nickel alloy layer on a first surface of the polymer layer, and a second nickel alloy layer on a second surface of the polymer layer. Each of, or at least one of, the first and second nickel alloy layers may include a nickel-iron binary alloy.

According to an example embodiment of the present disclosure, a negative electrode for an all-solid-state battery may include a composite substrate, and a negative electrode coating layer on the composite substrate. The composite substrate may include a polymer layer, and a first nickel alloy layer on the polymer layer. The first nickel alloy layer may include a nickel-iron binary alloy.

According to an example embodiment of the present disclosure, an all-solid-state battery may include a negative electrode layer that includes a composite substrate and a negative electrode coating layer on the composite substrate, a solid electrolyte layer on the negative electrode layer, a positive electrode layer on the solid electrolyte layer. The composite substrate may include a polymer layer, and a first nickel alloy layer on the polymer layer. The first nickel alloy layer may include a nickel-iron binary alloy.

### BRIEF DESCRIPTION OF DRAWINGS

FIG. 1 illustrates a cross-sectional view showing an all-solid-state battery according, to an example embodiment of the present disclosure.
FIGS. 2 and 3 illustrate cross-sectional views showing an all-solid-state battery, according to an example embodiment of the present disclosure.
FIGS. 4 and 5 illustrate cross-sectional views showing a composite substrate, according to an example embodiment of the present disclosure.
FIG. 6A illustrates a flow chart showing a method of manufacturing a composite substrate, according to an example embodiment of the present disclosure.
FIGS. 6B to 6D illustrate cross-sectional views showing a method of manufacturing a composite substrate, according to an example embodiment of the present disclosure.
FIG. 7A illustrates a graph showing evaluation results of cyclic voltammetry for a half-cell in accordance with charge-discharge cycles in Comparative 1.
FIG. 7B illustrates a graph showing evaluation results of cyclic voltammetry for a half-cell in accordance with charge-discharge cycles in Comparative 2.
FIGS. 8A and 8B illustrate graphs showing evaluation results of cyclic voltammetry for half-cells in accordance with charge-discharge cycles in Comparatives 2 and 3, respectively.
FIGS. 8C to 8F illustrate graphs showing evaluation results of cyclic voltammetry for half-cells in accordance with charge-discharge cycles in Embodiments 1 to 4, respectively

### DETAILED DESCRIPTION OF EMBODIMENTS

In order to sufficiently understand the configuration and effect of the present disclosure, some example embodiments of the present disclosure are described with reference to the accompanying drawings. It should be noted, however, that the present disclosure is not limited to the following example embodiments, and may be implemented in various forms. Rather, the example embodiments are provided only to disclose the present disclosure, and to let those skilled in the art fully know the scope of the present disclosure.

In this description, it is understood that, when an element is referred to as being "on" another element, the element can be "directly on" the other element, or intervening elements may be present between therebetween. In the drawings, thicknesses of some components are exaggerated for effectively explaining the technical contents. Like reference numerals refer to like elements throughout the specification.

Unless otherwise specially noted in this description, the expression of singular form may include the expression of plural form. In addition, unless otherwise specially noted, the phrase "A or B" may indicate "A but not B," "B but not A," and "A and B." The terms "comprises/includes" and/or "comprising/including" used in this description do not exclude the presence or addition of one or more other components.

In this description, the term "combination thereof" may refer to a mixture, a stack, a composite, a copolymer, an alloy, a blend, or a reaction product.

Unless otherwise especially defined in this description, a particle diameter may be an average particle diameter. In addition, a particle diameter indicates an average particle diameter (D₅₀) where a cumulative volume is about 50 volume % in a particle size distribution. The average particle diameter (D₅₀) may be measured by a method widely known to those skilled in the art, for example, by a particle size analyzer, a transmission electron microscope (TEM) image, or a scanning electron microscope (SEM) image. Alternatively, a dynamic light-scattering measurement device is used to perform a data analysis, the number of particles is counted for each particle size range, and from this, an average particle diameter (D₅₀) value may be obtained through a calculation. Dissimilarly, a laser scattering method may be utilized to measure the average particle diameter (D₅₀). In the laser scattering method, a target particle is distributed in a dispersion solvent, introduced into a laser scattering particle measurement device (e.g., MT3000 commercially available from Microtrac, Inc), irradiated with ultrasonic waves of 28 kHz at a power of 60 W, and then an average particle diameter (D₅₀) is calculated in the 50% standard of particle diameter distribution in the measurement device. For example, average particle diameter (D50) as referred to herein may be measured by laser diffraction analysis using a laser diffraction particle size analyzer in accordance with ISO 13320.

In an example embodiment, the Brunauer-Emmett-Teller (BET) specific surface area as referred to herein may be measured by nitrogen gas adsorption using a BET surface area analyzer in accordance with ISO 9277.When the terms "about" or "substantially" are included in this specification in connection with a numerical value, it is intended that the associated numerical value include a tolerance of ±10% around the stated numerical value. When ranges are specified, the range includes all values therebetween such as increments of 0.1%.

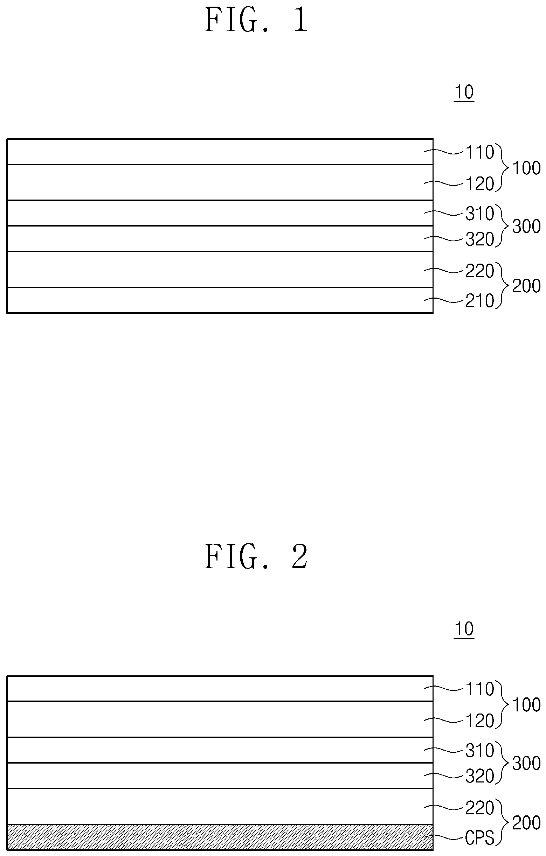

FIG. 1 illustrates a cross-sectional view showing an all-solid-state battery, according to an example embodiment of the present disclosure.

Referring to FIG. 1, an all-solid-state battery 10 may include a negative electrode layer 200, a solid electrolyte layer 300 on the negative electrode layer 200, and a positive electrode layer 100 on the solid electrolyte layer 300.

The positive electrode layer 100 may include a positive electrode current collector 110 and a positive electrode active material layer 120 located on the positive electrode current collector 110. The positive electrode active material layer 120 may include at least one of a positive electrode active material, a solid electrolyte, a conductive material, and a binder.

The positive electrode current collector 110 may provide a reference surface on which the positive electrode active material layer 120 is located. For example, the positive electrode current collector 110 may include a plate or foil including at least one of indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof.

Differently from what is illustrated in FIG. 1, in an example embodiment of the present disclosure, the positive electrode current collector 110 may be omitted. Although not shown, in order to increase adhesion between the positive electrode current collector 110 and the positive electrode active material layer 120, a carbon layer having a thickness in a range of ≥ 0.1 µm to ≤ 4 µm may further be located between the positive electrode current collector 110 and the positive electrode active material layer 120.

The positive electrode active material 120 may include a material that is configured to reversibly absorb and desorb lithium ions. The positive electrode active material 120 may include a plurality of particles. The positive electrode active material 120 may include, for example, at least one of lithium transition metal oxide (e.g., lithium cobalt oxide (LCO), lithium nickel oxide, lithium nickel cobalt oxide, lithium nickel cobalt aluminum oxide (NCA), lithium nickel cobalt manganese oxide (NCM), lithium manganate, or lithium iron phosphate), nickel sulfide, copper sulfide, lithium sulfide, iron oxide, or vanadium oxide, but the present disclosure is not limited thereto. The positive electrode active material 120 may be included alone, or in a mixture of two or more substances.

The lithium transition metal oxide may be or include, for example, a compound represented by one of LiₐA_{1-b}B_{S}D₂ (where 0.90 ≤ a ≤ 1 and 0 ≤ b ≤ 0.5), LiₐE_{1-b}B_{b}O_{2-c}Dₑ (where 0.90 ≤ a ≤ 1, 0 ≤ b ≤ 0.5, and 0 ≤ c ≤ 0.05), LiE_{2-b}B_{b}O_{4-c}D_{c} (where 0 ≤ b ≤ 0.5 and 0 ≤ c ≤ 0.05), LiₐNi_{1-b-c}Co_{b}B_{c}D_{α} (where 0.90 ≤ a ≤ 1, 0 ≤ b ≤ 0.5, 0 ≤ c ≤ 0.05, and 0<α<2), LiₐNi_{1-b-c}Co_{b}B_{c}O_{2-α}F_{α} (where 0.90 ≤ a ≤ 1, 0 ≤ b ≤ 0.5, 0 ≤ c ≤ 0.05, and 0<α<2), LiₐNi_{1-b-c}Mn_{b}B_{c}D_{α} (where 0.90 ≤ a ≤ 1, 0 ≤ b ≤ 0.5, 0 ≤ c ≤ 0.05, and 0< α ≤ 2), LiₐNi_{1-b-c}Mn_{b}B_{c}O_{2-α}F_{α} (where 0.90 ≤ a ≤ 1, 0 ≤ b ≤ 0.5, 0 ≤ c ≤ 0.05, and 0<α<2), LiₐNi_{b}E_{c}G_{d}O₂ (where 0.90 ≤ a ≤ 1, 0 ≤ b ≤ 0.9, 0 ≤ c ≤ 0.5, and 0.001 ≤ d ≤ 0.1), LiₐNi_{b}Co_{c}Mn_{d}GₑO₂ (where 0.90 ≤ a ≤ 1, 0 ≤ b ≤ 0.9, 0 ≤ c ≤ 0.5, 0 ≤ d ≤ 0.5, and 0.001 ≤ e ≤ 0.1), LiₐNiG_{b}O₂ (where 0.9 ≤ a ≤ 1 and 0.001 ≤ b ≤ 0.1), LiₐCoG_{b}O₂ (where 0.90 ≤ a ≤ 1 and 0.001 ≤ b ≤ 0.1), LiₐMnG_{b}O₂ (where 0.90 ≤ a ≤ 1 and 0.001 ≤ b ≤ 0.1), LiₐMn₂G_{b}O₄ (where 0.90 ≤ a ≤ 1 and 0.001 ≤ b ≤ 0.1), QO₂, QS₂, LiQS₂, V₂O₅, LiV₂O₅, LiIO₂, LiNiVO₄, Li_{3-f}J₂(PO₄)₃ (where 0 ≤ f≤ 2), Li_{3-f}Fe₂(PO₄)₃ (where 0 ≤ f≤ 2), LiFePO₄. In the compounds above, "A" may be or include at least one of Ni, Co, Mn, or a combination thereof, "B" may be or include at least one of Al, Ni, Co, Mn, Cr, Fe, Mg, Sr, V, a rare-earth element, or a combination thereof, "D" may be or include at least one of O, F, S, P, or a combination thereof, "E" may be or include at least one of Co, Mn, or a combination thereof, "F" may be or include at least one of F, S, P, or a combination thereof, "G" may be or include at least one of Al, Cr, Mn, Fe, Mg, La, Ce, Sr, V, or a combination thereof, "Q" may be or include at least one of Ti, Mo, Mn, or a combination thereof, "I" may be or include at least one of Cr, V, Fe, Sc, Y, or a combination thereof, and "J" may be or include at least one of V, Cr, Mn, Co, Ni, Cu, or a combination thereof.

The positive electrode active material 120 may include, for example, a lithium salt of transition metal oxide having a layered rock salt type structure among lithium transition metal oxides discussed above. The term "layered rock salt type structure" may refer to a structure in which an oxygen atom layer and a metal atom layer are alternately and regularly arranged in a <111> direction of a cubic rock salt type structure, where each atom layer forms a two-dimensional plane. The term "cubic rock salt type structure" may refer to a sodium chloride (NaCl) type structure, which is a type of crystal structure, and for example, has a structure in which face centered cubic lattices (FCCs) each formed of or include cations and anions are displaced from each other by 1/2 of a ridge of a unit lattice. The lithium transition metal oxide having the layered rock salt type structure may be or include a ternary lithium transition metal oxide, such as LiNiₓCo_{y}Al_{z}O₂ (NCA) or LiNiₓCo_{y}Mn_{z}O₂ (NCM) (where 0<x<1,0<y<1, 0<z<1, and x+y+z=1). When the positive electrode active material 120 includes a ternary lithium transition metal oxide having the layered rock salt type structure, the all-solid-state battery 10 may improve in energy density and thermal stability.

The compound included in the positive electrode active material 120 may be covered with a coating layer (not shown). The positive electrode active material 120 may be included in a mixture of the compound and a compound to which the coating layer is added. The coating layer added to a surface of the positive electrode active material 120 may include, for example, at least one of oxide, hydroxide, oxyhydroxide, oxycarbonate, or hydrocarbonate of a coating element discussed below. The compound forming the coating layer may be amorphous or crystalline. The coating element included in the coating layer may include at least one of Mg, Al, Co, K, Na, Ca, Si, Ti, V, Sn, Ge, Ga, B, As, Zr, or a mixture thereof. The coating layer may include, for example, Li₂O-ZrO₂ (LZO). A method for forming the coating layer may be any method that does not adversely affect physical characteristics of the positive electrode active material. For example, spray coating or immersion may be utilized to form the coating layer.

When the positive electrode active material includes nickel (Ni) as a ternary lithium transition metal oxide such as NCA or NCM, a capacity density of the all-solid-state battery 10 may increase to reduce metal elution of the positive electrode active material in a charged state. Thus, the all-solid-state battery 10 may improve in cycle characteristics in a charged state. The language "cycle characteristics" may refer to properties that indicate the degree to which the all-solid-state battery 10 is degraded due to charge and discharge. For example, the all-solid-state battery 10 with high cycle characteristics may degrade less due to charge and discharge, while the all-solid-state battery 10 with low cycle characteristics may degrade more due to charge and discharge.

The positive electrode active material may have a substantially spherical or substantially oval particle shape. There may be no limitation on a particle diameter and an amount of the positive electrode active material.

The solid electrolyte may have a particle shape. The solid electrolyte may be dispersed between the positive electrode active materials. The solid electrolyte may include a sulfide-based solid electrolyte with desired or improved lithium ion conductivity. The sulfide-based solid electrolyte may include, for example, at least one of Li₂S-P₂S₅, Li₂S-P₂S₅-LiX (where X is a halogen element), Li₂S-P₂S₅-Li₂O, Li₂S-P₂S₅-Li₂O-LiI, Li₂S-SiS₂, Li₂S-SiS₂-LiI, Li₂S-SiS₂-LiBr, Li₂S-SiS₂-LiCl, Li₂S-SiS₂-B₂S₃-LiI, Li₂S-SiS₂-P₂S₅-LiI, Li₂S-B₂S₃, Li₂S-P₂S₅-ZₘSₙ (where m and n are each a positive integer, and "Z" is or includes at least one of Ge, Zn, and Ga), Li₂S-GeS₂, Li₂S-SiS₂-Li₃PO₄, Li₂S-SiS₂-LiₚMO_{q} (where p and q are each a positive integer, and "M" is or includes at least one of P, Si, Ge, B, Al, Ga, and In), Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤ 2).

The sulfide-based solid electrolyte may be or include an argyrodite-type compound including, for example, at least one of Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤ 2). For example, the sulfide-based solid electrolyte may be or include an argyrodite-type compound including at least one of Li₆PS₅Cl, Li₆PS₅Br, and Li₆PS₅I.

Alternatively, the sulfide-based solid electrolyte may be or include an argyrodite-type compound including Li₇₋ₐMₐPS_{6-c}X_{c} (where 0 ≤ a ≤ 2 and 0 ≤ c ≤ 2). In the chemical formula above, X may be or include at least one of F, Br, Cl, or a combination thereof. In addition, M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density of ≥ 1.5 g/cc to ≤ 2.0 g/cc. As the argyrodite-type solid electrolyte has a density of equal to or greater than about 1.5 g/cc, it may be possible to decrease an internal resistance of an all-solid-state battery and to reduce or prevent a solid electrolyte layer from short-circuit and penetration caused by the formation of lithium dendrite. The solid electrolyte may have an elastic modulus in a range of, for example, ≥ 15 GPa to ≤ 35 GPa.

The solid electrolyte in the positive electrode active material layer 120 may have a medium-sized average particle diameter (D₅₀) that is less than the particle diameter (D₅₀) of each of first and second solid electrolytes in the solid electrolyte layer 300 which is discussed below. For example, the medium-sized average particle diameter (D₅₀) of the solid electrolyte in the positive electrode active material layer 120 may be about equal to or less than about 90%, equal to or less than about 80%, equal to or less than about 70%, equal to or less than about 60%, equal to or less than about 50%, equal to or less than about 40%, equal to or less than about 30%, or equal to or less than about 20% of the medium-sized average particle diameter (D₅₀) of a solid electrolyte included in the solid electrolyte layer 300. The medium-sized average particle diameter (D₅₀) may be a median diameter measured by a laser particle size distribution analyzer.

The positive electrode active material layer 120 may include a conductive material. The conductive material may have conductivity without causing chemical change of the all-solid-state battery 10 to increase conductivity of the positive electrode active material and the solid electrolyte. The conductive material may include a carbon-based material. The conductive material may include, for example, one or more of graphite, carbon black, acetylene black, carbon nano-fiber, and carbon nano-tube.

The positive electrode active material layer 120 may further include a binder. The binder may combine the positive electrode active material, the solid electrolyte, and the conductive material to each other in the positive electrode active material layer 120. The binder may include a material for improving adhesion between the positive electrode active material layer 120 and the positive electrode current collector 110. The binder may include, for example, one or more of polyvinylidenefluoride, styrene butadiene rubber (SBR), polytetrafluoroethylene, vinylidene fluoride/hexafluoropropylene copolymers, polyacrylonitrile, and polymethyl methacrylate.

Based on the total 100 parts by weight of the positive electrode active material, the solid electrolyte, the conductive material, and the binder, the positive electrode active material may be included in an amount in a range of ≥ 70 parts by weight to ≤ 92 parts by weight in the positive electrode active material layer 120. Based on the total 100 parts by weight of the positive electrode active material, the solid electrolyte, the conductive material, and the binder, the binder may be included in an amount in a range of ≥ 0.5 parts by weight to ≤ 1.5 parts by weight in the positive electrode active material layer 120.

Based on 100 parts by weight of the solid electrolyte, the conductive material may be included in an amount of ≥ 1 part by weight to ≤ 50 parts by weight in the positive electrode active material layer 120. When the positive electrode active material layer 120 includes the conductive material which amount is less than about 1 part by weight based on 100 parts by weight of the solid electrolyte, a proportion of the conductive material may decrease to reduce electrical conductivity of the positive electrode active material layer 120. When the positive electrode active material layer 120 includes the conductive material which amount is greater than about 50 parts by weight based on 100 parts by weight of the solid electrolyte, a proportion of the conductive material may substantially increase to cause incomplete formation of a coating layer that covers a surface of the solid electrolyte.

The positive electrode active material layer 120 may further include an additive, such as or including at least one of a filler, a coating agent, a dispersant, and an ion conductivity agent, in addition to the positive electrode active material, the solid electrolyte, the conductive material, and the binder.

The negative electrode layer 200 may include a negative electrode current collector 210 and a negative electrode coating layer 220 on the negative electrode current collector 210. The negative electrode current collector 210 may provide a reference surface on which the negative electrode coating layer 220 is located. The negative electrode current collector 210 may include a material that does not react with lithium, for example, a material that does not form an alloy or a compound with lithium. For example, the negative electrode current collector 210 may include at least one metal such as or including at least one of copper (Cu), stainless steel, titanium (Ti), iron (Fe), cobalt (Co), and nickel (Ni). A thickness of the negative electrode current collector 210 may range from ≥ 1 µm to ≤ 20 µm, for example, from ≥ 5 µm to ≤ 15 µm or from ≥ 7 µm to ≤ 10 µm.

The negative electrode current collector 210 may be formed of or include one of the metals mentioned above, an alloy of two or more of the metals mentioned above, or a coating material. The negative electrode current collector 210 may have, for example, a plate or foil shape. In an example embodiment, the negative electrode current collector 210 may be omitted.

The negative electrode coating layer 220 may induce growth of lithium metal between the negative electrode coating layer 220 and the negative electrode current collector 210 when the all-solid-state battery 10 is charged. The negative electrode coating layer 220 may be configured as a protection layer for lithium metal, and simultaneously or contemporaneously may reduce or suppress precipitation and growth of lithium dendrite.

The negative electrode coating layer 220 may include a metal particle and a carbonaceous material. For example, the negative electrode coating layer 220 may include at least one metal particle such as or including at least one of gold (Au), platinum (Pt), palladium (Pd), silicon (Si), silver (Ag), aluminum (Al), bismuth (Bi), tin (Sn), and zinc (Zn). The negative electrode coating layer 220 may include at least one carbon-based material such as or including at least one of carbon black, acetylene black, furnace black, Ketjen black, and graphene. In an example embodiment, the negative electrode coating layer 220 may include a mixture of carbon black and silver (Ag).

The negative electrode coating layer 220 may further include an additive in addition to metal and carbon. The negative electrode coating layer 220 may include at least one additive such as or including at least one of, for example, a binder, a filler, a coating agent, a dispersant, and an ion conductivity agent.

The negative electrode coating layer 220 may have a thickness that is less than the thickness of the positive electrode active material layer 120. For example, the negative electrode coating layer 220 may have a thickness that is equal to or less than about 50%, equal to or less than about 40%, equal to or less than about 30%, equal to or less than about 20%, equal to or less than about 10%, or equal to or less than about 5%, of the thickness of the positive electrode active material layer 120. The negative electrode coating layer 220 may have a thickness in a range of, for example, ≥ 1 µm to ≤ 20 µm, ≥ 2 µm to ≤ 10 µm, or ≥ 3 µm to ≤ 7 µm. When the negative electrode coating layer 220 has an excessively or substantially small thickness, lithium dendrite formed between the negative electrode coating layer 220 and the negative electrode current collector 210 may collapse the negative electrode coating layer 220 and thus reduce cycle characteristics of the all-solid-state battery 10. When the negative electrode coating layer 220 has an excessively or substantially large thickness, the all-solid-state battery 10 may have a decreased energy density and an increased internal resistance caused by the negative electrode coating layer 220, thereby reducing cell cycle characteristics.

Although not shown, a carbon layer may further be included to increase adhesion between the negative electrode coating layer 220 and the solid electrolyte layer 300.

The solid electrolyte layer 300 may be provided between the positive electrode layer 100 and the negative electrode layer 200. The solid electrolyte layer 300 may include a sulfide-based solid electrolyte with desired or improved lithium ion conductivity. The solid electrolyte in the solid electrolyte layer 300 may include a material that is the same as, or different from, one of materials included in the solid electrolyte of the positive electrode active material layer 120.

The solid electrolyte layer 300 may include a positive electrode solid electrolyte layer 310 and a negative electrode solid electrolyte layer 320. The positive electrode solid electrolyte layer 310 may be adjacent to the positive electrode layer 100, and the negative electrode solid electrolyte layer 320 may be adjacent to the negative electrode layer 200.

The positive electrode solid electrolyte layer 310 may include a first solid electrolyte, and the negative electrode solid electrolyte layer 320 may include a second solid electrolyte. Particles of each of the first and second solid electrolytes may have a substantially spherical shape, a substantially oval shape, or any suitable particle shape.

Each of, or at least one of, the first and second solid electrolytes may have a sulfide-based solid electrolyte. The first and second solid electrolytes may be the same as, or different from, each other. Each of, or at least one of, the first and second solid electrolytes may be in an amorphous, crystalline, or mixed state thereof. The solid electrolyte may include at least one of sulfur (S), phosphorus (P), and lithium (Li) among component elements included in the sulfide-based solid electrolyte mentioned above. For example, the solid electrolyte may be or include a material including Li₂S-P₂S₅. When a material including Li₂S-P₂S₅ is utilized as a sulfide-based solid electrolyte material of the solid electrolyte, a mixing molar ratio of Li₂S and P₂S₅ may be in a range of about 50:50 to about 90:10.

The sulfide-based solid electrolyte may be or include an argyrodite-type compound including, for example, at least one of Li₇₋ₓPS₆₋ₓClₓ (where 0 ≤ x ≤ 2), Li₇₋ₓPS₆₋ₓBrₓ (where 0 ≤ x ≤ 2), and Li₇₋ₓPS₆₋ₓIₓ (where 0 ≤ x ≤ 2). For example, the sulfide-based solid electrolyte may be or include an argyrodite-type compound including at least one of Li₆PS₅Cl, Li₆PS₅Br, and Li₆PS₅I.

Alternatively, the sulfide-based solid electrolyte may be or include an argyrodite-type compound including Li₇₋ₐMₐPS_{6-c}X_{c} (where 0 ≤ a ≤ 2 and 0 ≤ c ≤ 2). In the chemical formula above, X may be or include at least one of F, Br, Cl, or a combination thereof. In addition, M may be or include at least one of scandium (Sc), yttrium (Y), titanium (Ti), zirconium (Zr), hafnium (Hf), vanadium (V), niobium (Nb), tantalum (Ta), chromium (Cr), molybdenum (Mo), tungsten (W), manganese (Mn), technetium (Tc), rhenium (Re), iron (Fe), ruthenium (Ru), osmium (Os), cobalt (Co), rhodium (Rh), iridium (Ir), nickel (Ni), palladium (Pd), platinum (Pt), copper (Cu), silver (Ag), gold (Au), zinc (Zn), cadmium (Cd), mercury (Hg), aluminum (Al), gallium (Ga), indium (In), thallium (Tl), silicon (Si), germanium (Ge), tin (Sn), lead (Pb), arsenic (As), antimony (Sb), bismuth (Bi), or a combination thereof.

The argyrodite-type solid electrolyte may have a density in a range of ≥ 1.5 g/cc to ≤ 2.0 g/cc. As the argyrodite-type solid electrolyte has a density that is equal to or greater than about 1.5 g/cc, it may be possible to decrease an internal resistance of an all-solid-state battery, and to reduce or prevent a solid electrolyte layer from short-circuit and penetration caused by the formation of lithium dendrite. The first solid electrolyte may have an elastic modulus in a range of, for example, ≥ 15 GPa to ≤ 35 GPa.

Each of, or at least one of, the positive and negative electrode solid electrolyte layers 310 and 320 may further include a binder. The binder included in the solid electrolyte layer 300 may include at least one of styrene-butadiene rubber (SBR), polytetrafluoroethylene, polyvinylidenefluoride, polyethylene, but the present disclosure is not limited thereto. The binder of each of the positive and negative solid electrolyte layers 310 and 320 may be the same as, or similar to, the binder of the positive electrode active material layer 120 or the binder of the negative electrode coating layer 220.

In the example embodiment that follows, a detailed description of technical features redundant to those of the all-solid-state battery discussed above with reference to FIG. 1 is omitted, and a difference thereof is discussed in detail.

An all-solid-state battery including a sulfide-based solid electrolyte may produce hydrogen sulfide during a charge-discharge procedure thereof, and hydrogen sulfide may induce corrosion of current collectors, which may result in degradation in lifespan characteristics of an all-solid-state battery. For example, hydrogen sulfide generated from a solid electrolyte layer may pass through a negative electrode coating layer to corrode a negative electrode current collector, therefore significantly degrading lifespan characteristics of an all-solid-state battery.

A composite substrate according to some example embodiments of the present disclosure may include a nickel alloy layer, leading to desired or improved resistance to hydrogen sulfide. Accordingly, an all-solid-state battery including the composite substrate may have desired or improved lifespan characteristics and improved cell performance.

FIG. 2 illustrates a cross-sectional view showing an all-solid-state battery, according to an example embodiment.

Referring to FIG. 2, an all-solid-state battery 10 according to an example embodiment may include a negative electrode layer 200, a solid electrolyte layer 300 on the negative electrode layer 200, and a positive electrode layer 100 on the solid electrolyte layer 300. The all-solid-state battery 10 according to an example embodiment may include a composite substrate CPS. The composite substrate CPS may correspond to the negative electrode current collector 210 of the all-solid-state battery 10 discussed above with reference to FIG. 1. For example, the negative electrode layer 200 of the all-solid-state battery 10 may include a composite substrate CPS and a negative electrode coating layer 220 on the composite substrate CPS.

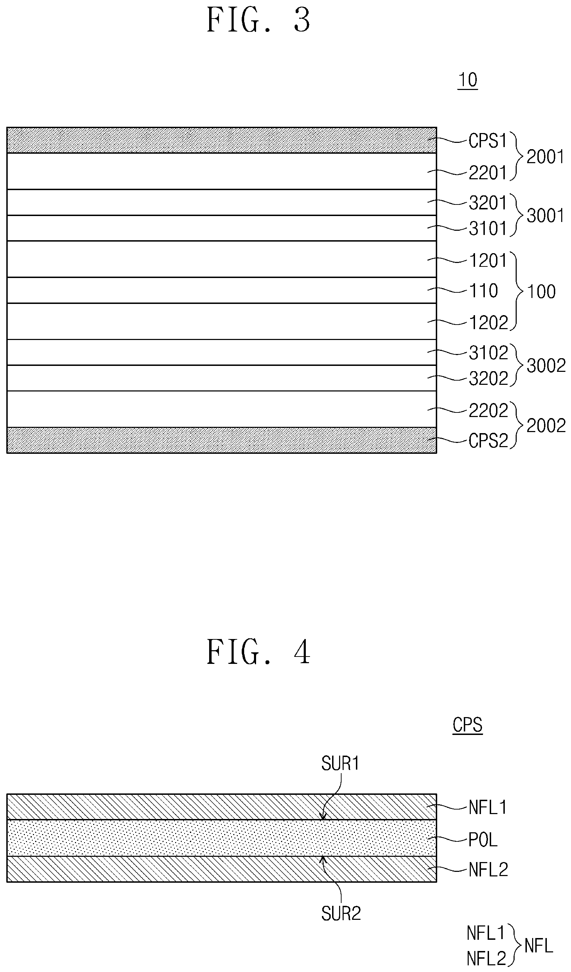

FIG. 3 illustrates a cross-sectional view showing an all-solid-state battery, according to an example embodiment.

Referring to FIG. 3, an all-solid-state battery 10 according to an example embodiment may include a positive electrode layer 100, a first solid electrolyte layer 3001 on a top surface of the positive electrode layer 100, a first negative electrode layer 2001 on a top surface of the first solid electrolyte layer 3001, a second solid electrolyte layer 3002 on a bottom surface of the positive electrode layer 100, and a second negative electrode layer 2002 on a bottom surface of the second solid electrolyte layer 3002.

The positive electrode layer 100 may include a positive electrode current collector 110, a first positive electrode active material layer 1201 on one surface of the positive electrode current collector 110, and a second positive electrode active material layer 1202 on another surface of the positive electrode current collector 110 opposite the first positive electrode active material layer 1201. Each of the first and second positive electrode active material layers 1201 and 1202 may correspond to the positive electrode active material layer 120 discussed above with reference to FIG. 1.

Each of the first and second negative electrode layers 2001 and 2002 may correspond to the negative electrode layer 200 discussed above with reference to FIG. 1. For example, the first negative electrode layer 2001 may include a first composite substrate CPS 1 and a first negative electrode coating layer 2201. The second negative electrode layer 2002 may include a second composite substrate CPS2 and a second negative electrode coating layer 2202.

Each of the first and second solid electrolyte layers 3001 and 3002 may correspond to the solid electrolyte layer 300 discussed above with reference to FIG. 1. For example, the first solid electrolyte layer 3001 may include a first positive electrode solid electrolyte layer 3101 and a first negative electrode solid electrolyte layer 3201. The second solid electrolyte layer 3002 may include a second positive electrode solid electrolyte layer 3102 and a second negative electrode solid electrolyte layer 3202.

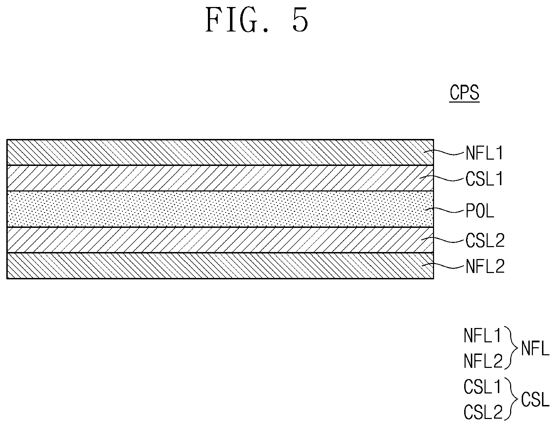

FIGS. 4 and 5 illustrate cross-sectional views showing a composite substrate CPS, according to an example embodiment of the present disclosure.

Referring to FIG. 4, a composite substrate CPS may include a polymer layer POL, and may also include a first nickel alloy layer NFL1 and a second nickel alloy layer NFL2 that are correspondingly provided on opposite surfaces of the polymer layer POL. For example, the composite substrate (CPS) may lnclude a polymer layer (POL), a first nickel alloy layer (NFL1) on a first surface(SUR1) of the polymer layer (POL); and a second nickel alloy layer (NFL2) on a second surface(SUR2) of the polymer layer (POL).

The polymer layer POL may include a polymer film. For example, the polymer layer POL may include at least one of a polyethylene (PE) film, a polypropylene (PP) film, a polyvinylidene chloride (PVDC) film, a polyethylene terephthalate (PET) film, or a multi-layered film including a combination thereof. For example, the polymer layer POL may be a polyethylene terephthalate (PET) film.

Each of the first and second nickel alloy layers NFL1 and NFL2 may include a nickel alloy. For example, each of, or at least one of, the first and second nickel alloy layers NFL1 and NFL2 may include a nickel-iron (Ni-Fe) binary alloy. As each of, or at least one of, the first and second nickel alloy layers NFL1 and NFL2 includes a nickel-iron (Ni-Fe) binary alloy, it may be possible to achieve low resistivity and desired or improved sulfate resistance.

A nickel alloy layer including a nickel-iron (Ni-Fe) binary alloy may be desired or improved in terms of process efficiency. For example, when an electroplating process is performed using a plating solution including nickel ions and iron ions, it may be possible to form a nickel-iron (Ni-Fe) binary alloy having a uniform thickness. In contrast, when iron (Fe) is replaced with chromium (Cr), titanium (Ti), and the like, an oxide layer may be formed and no further plating may occur on and around the oxide layer, causing difficulty in forming an alloy layer with a uniform thickness. In addition, as the oxide layer is highly brittle, the oxide layer may be easily peeled off or fractured such that a current collector may not maintain a shape thereof. It may thus be required to perform an additional process to reduce or suppress, or remove, the oxide layer, and accordingly, process efficiency may be reduced.

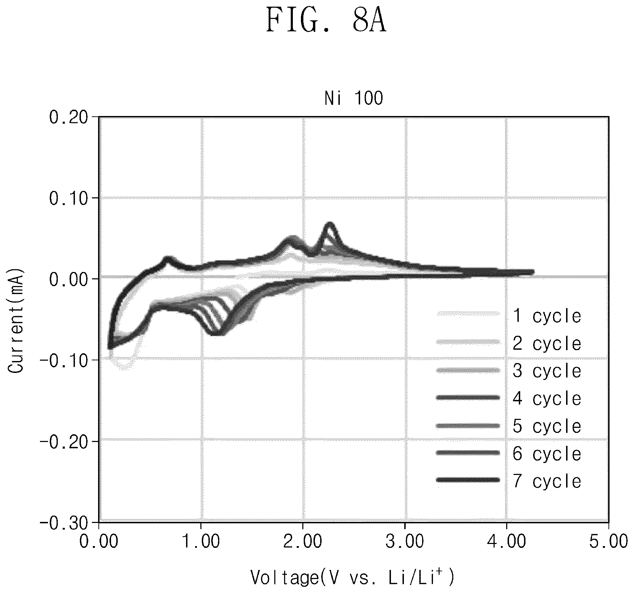

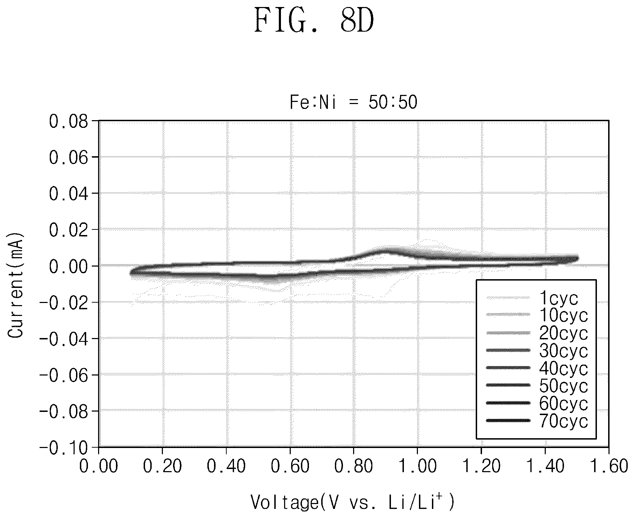

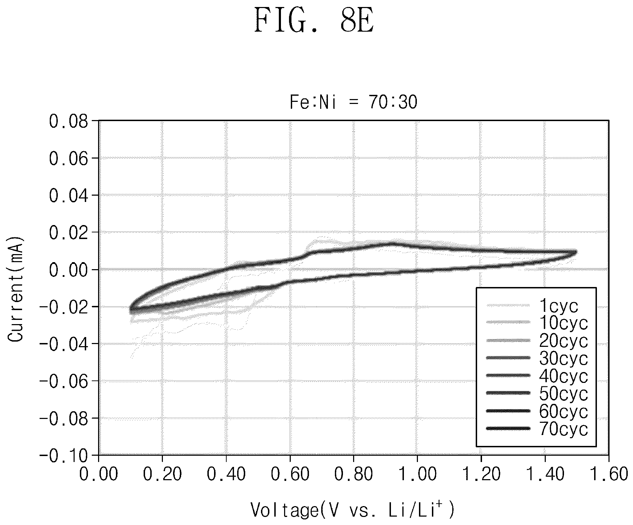

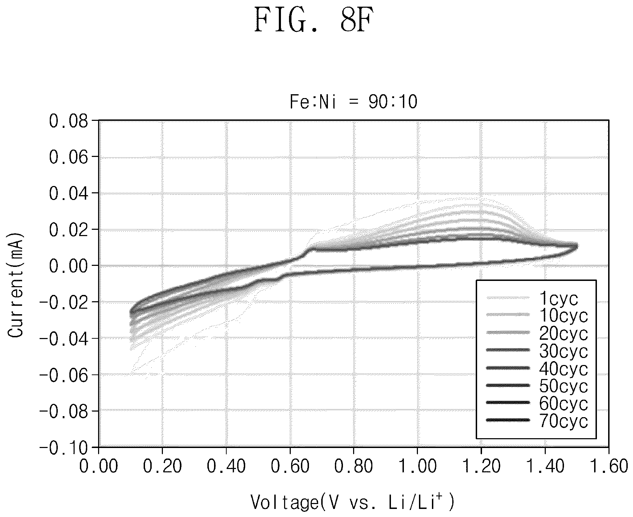

In an example embodiment, an amount of nickel in each of the first and second nickel alloy layers NFL1 and NFL2 may range from ≥ 5 wt% to ≤ 70 wt%, for example, from ≥ 5 wt% to ≤ 50 wt%, from ≥ 5 wt% to ≤ 40 wt%, from ≥ 10 wt% to ≤ 50 wt%, from ≥ 10 wt% to ≤ 30 wt%, from ≥ 30 wt% to ≤ 50 wt%, or from ≥ 65 wt% to ≤ 70 wt%. In an example embodiment, referring to FIGS. 8A to 8F, when an amount of nickel in each of the first and second nickel alloy layers NFL1 and NFL2 is about 5 wt% to about 70 wt%, resistance to sulfation may be improved. Referring to Table 2, when an amount of nickel in each of the first and second nickel alloy layers NFL1 and NFL2 is about 10 wt% to about 30 wt%, the resistivity may be decreased. In addition, when an amount of nickel in each of the first and second nickel alloy layers NFL1 and NFL2 is about 65 wt% to about 70 wt%, or about 70 wt%, the resistivity may also be decreased. Referring to Table 3, when an amount of nickel in each of the first and second nickel alloy layers NFL1 and NFL2 is about 30 wt% to about 50 wt%, the initial discharge capacity at 0.33C and lifespan characteristics may be improved.

In an example embodiment, an amount of iron in each of the first and second nickel alloy layers NFL1 and NFL2 may range from ≥ 30 wt% to ≤ 95 wt%, for example, from ≥ 50 wt% to ≤ 95 wt%, from ≥ 60 wt% to ≤ 95 wt%, from ≥ 50 wt% to ≤ 90 wt%, from ≥ 70 wt% to ≤ 90 wt%, or from ≥ 50 wt% to ≤ 70 wt%, or from ≥ 30 wt% to ≤ 35 wt%.

In an example embodiment, a thickness of the polymer layer POL may be greater than the thickness of each of the first and second polymer layers NFL1 and NFL2.

In an example embodiment, a thickness of each of the first and second nickel alloy layers NFL1 and NFL2 may range from ≥ 0.5 µm to ≤ 5 µm. The thickness of the polymer layer POL may range from ≥ 4 µm to ≤ 25 µm.

As the composite substrate CPS according to some example embodiments of the present disclosure includes the first nickel alloy layer NFL1 and the second nickel alloy layer NFL2, it may be possible to achieve a desired or improved resistance to sulfide gas. For example, the composite substrate CPS according to some example embodiments of the present disclosure may have a desired or improved resistance to sulfation.

Referring to FIG. 5, the composite substrate CPS may further include a seed layer CSL. For example, the composite substrate CPS may further include a first seed layer CSL1 between the polymer layer POL and the first nickel alloy layer NFL1, and a second seed layer CSL2 between the polymer layer POL and the second nickel alloy layer NFL2.

The seed layer CSL may provide high electrical conductivity to accelerate the formation of the nickel alloy layer NFL during electroplating. In addition, the seed layer CSL may improve adhesion between the polymer layer POL and the nickel alloy layer NFL, leading to an improvement in rigidity of the composite substrate CPS.

Each of, or at least one of, the seed layers CSL1 and CSL2 may include at least one of copper, palladium, nickel, gold, chromium, silver, or a combination thereof. For example, each of, or at least one of, the first and second seed layers CSL1 and CSL2 may be or include a copper thin layer.

In an example embodiment, each of, or at least one of, the first and second seed layers CSL1 and CSL2 may have a thickness in a range of ≥ 1 nm to ≤ 100 nm.

The following describes a method of manufacturing a composite substrate, according to some example embodiments of the present disclosure.

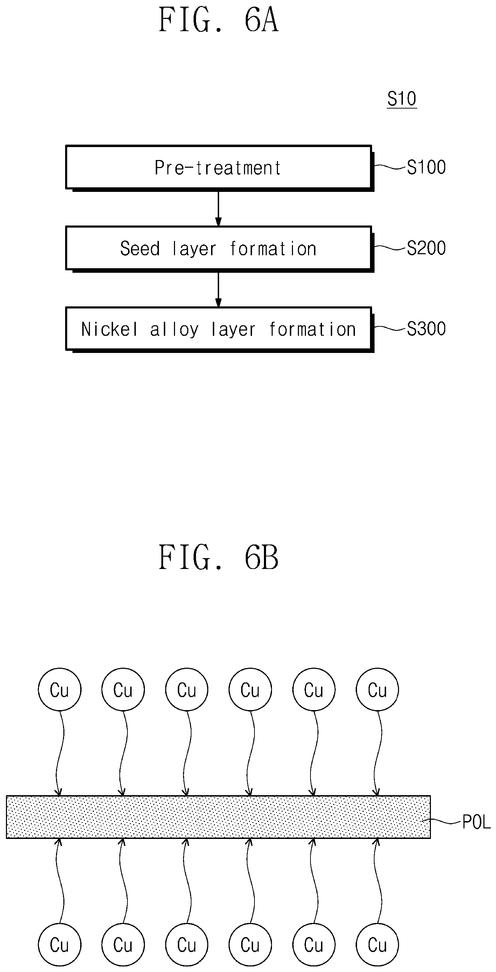

FIG. 6A illustrates a flow chart showing a method of manufacturing a composite substrate, according to an example embodiment of the present disclosure. FIGS. 6B to 6D illustrate cross-sectional views showing a method of manufacturing a composite substrate, according to an example embodiment of the present disclosure.

Referring to FIG. 6A, a composite substrate manufacturing method S10 according to some example embodiments of the present disclosure may include a pre-treatment process S100, a seed layer formation process S200, and a nickel alloy layer formation process S300.

In an example embodiment, the pre-treatment process S100 may include activating a surface of a polymer film.

The polymer film may correspond to the polymer layer POL discussed above with reference to FIG. 4.

The polymer film may be or include the polymer film discussed above with reference to FIG. 4. For example, the polymer film may include a polyethylene (PE) film, a polypropylene (PP) film, a polyvinylidene chloride (PVDC) film, a polyethylene terephthalate (PET) film, or a multi-layered film including a combination thereof.

In an example embodiment, the polymer film may extend in a longitudinal direction thereof. The polymer film may be wound.

In an example embodiment, the polymer film may have a thickness in a range of ≥ 4 µm to ≤ 25 µm.

In an example embodiment, activating the surface of the polymer film may include removing impurities from a surface of the non-conductive polymer film, and increasing a surface roughness. Thus, a surface energy of the polymer film may increase to improve wettability and adhesion. A method of activating the surface of the polymer film is not particularly limited, and may include for example, a chemical etching, a plasma treatment, or an ultraviolet/ozone treatment to active the surface of the polymer film.

In an example embodiment, the pre-treatment process S100 may further include catalyzing the polymer film. For example, the polymer film which surface is treated to be activated may be catalyzed with a palladium catalyst, and subsequently, the seed layer may be effectively formed. For example, the surface of the polymer film, which surface is treated to be activated, may pass through a first container filled with a tin salt (SnCl₂) solution, and then pass through a second container filled with a palladium salt (PdCl₂) solution, with the result that a palladium catalyst may be loaded on the surface of the polymer film. Based on the operations discussed above, the surface of the polymer film may become conductive.

In an example embodiment, referring to FIGS. 6A to 6C, the seed layer formation process S200 may include forming a seed layer CSL on one surface, or on opposite surfaces, of the polymer layer POL including the polymer film. For example, the seed layer formation process S200 may include forming a first seed layer CSL1 on a top surface of the polymer layer POL, and forming a second polymer layer CSL2 on a bottom surface of the polymer layer POL.

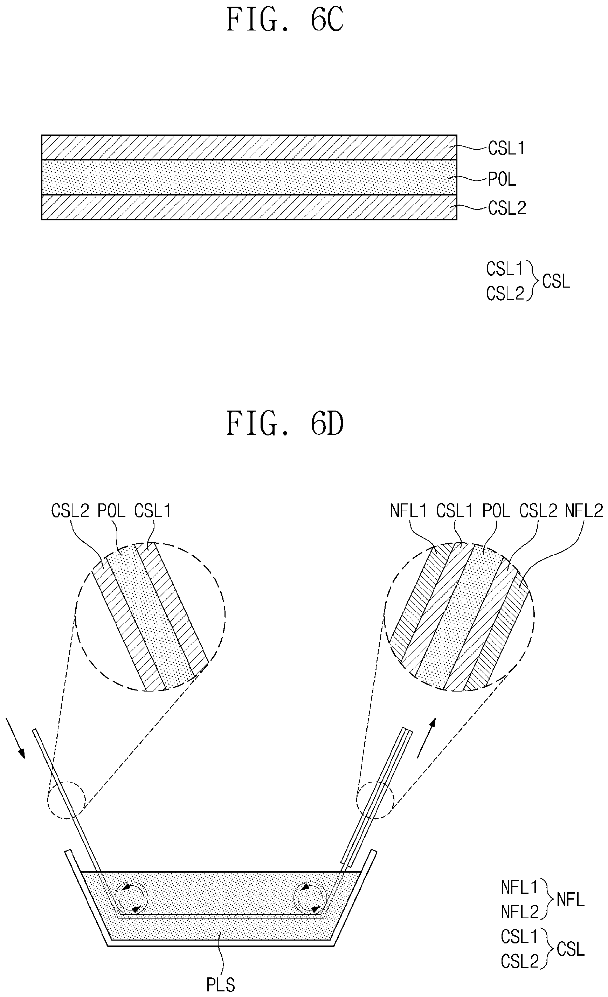

The seed layer CSL may include at least one of copper, palladium, nickel, good, chromium, silver, or a combination thereof. For example, referring to FIGS. 6B and 6C, the polymer layer POL may be attached thereto with copper particles to form the seed layer CSL, and seed layer may be or include a copper thin layer.

When an electroplating method is employed to form a nickel alloy layer (see NFL of FIG. 4 or 5) directly on the polymer layer POL, a high resistivity of the polymer layer POL may generate a large amount of Joule heating, and the polymer layer POL may therefore be thermally decomposed. In addition, when a magnitude of applied current is reduced to reduce or prevent the thermal decomposition, a plating rate may significantly decrease to reduced process efficiency.

As the seed layer CSL is formed on the polymer layer POL, and as the nickel alloy layer NFL is formed on the seed layer CSL, it may be possible to increase a magnitude of the applied current, and therefore to improve the formation rate of the nickel alloy layer NFL. For example, the composite substrate CPS may be produced at a high speed.

The formation of the seed layer CSL is not particularly limited, and a plating method known in the art may be utilized. For example, physical vapor deposition (PVD), chemical vapor deposition (CVD), or electroless plating may be used to form the seed layer CSL on the polymer layer POL.

In an example embodiment, the polymer layer POL, which is catalyzed with palladium, may be introduced into an electroless plating solution to form the seed layer CSL. For example, the electroless plating may include copper sulfate (CuSO₄·5H₂O) and a reducing agent. The reducing agent may include at least one of formaldehyde (HCHO), hydrazine (N₂N₄), sodium borohydride (NaBH₄), or a combination thereof. The electroless plating solution may further include a complexing agent, a pH adjuster, and a stabilizer.

In an example embodiment, the seed layer CSL may have a thickness in a range of ≥ 1 nm to ≤ 100 nm. For example, each of the first and second seed layers CSL1 and CSL2 may have a thickness in a range of ≥ 1 nm to ≤ 100 nm, for example, ≥ 10 nm to ≤ 50 nm.

In an example embodiment, referring to FIGS. 6A and 6D, the nickel alloy layer formation process S300 may include electroplating a nickel alloy on the seed layer CSL to form a nickel alloy layer NFL. The nickel alloy may be or include a nickel-iron binary alloy. For example, the formation of the nickel alloy layer NFL may include forming a first nickel alloy layer NFL1 on a top surface of the first seed layer CSL1, and forming a second nickel alloy layer NFL2 on a bottom surface of the second seed layer CSL2.

A continuous electroplating method may be performed to electroplate the nickel-iron alloy on the seed layer CSL. For example, the continuous electroplating method may include transporting the composite substrate CPS including the polymer layer POL and the seed layer CSL on the polymer layer POL, and passing the object through a plating bath filled with a plating solution PLS. The plating bath may include a metal plate electrically connected to a positive electrode. The metal plate may be or include a nickel-iron alloy. A current may be applied to the object during the passing thereof through the plating bath. The object may be electrically connected to a negative electrode.

In an example embodiment, the plating solution PLS may include nickel chloride and ferrous sulfate.

In an example embodiment, the plating solution PLS may have a pH in a range of ≥ 2 to ≤ 5.

In an example embodiment, a density of current applied to the object may range from ≥ 0.5 A/dm² to ≤ 10 A/dm², or ≥ 1 A/dm² to ≤ 5 A/dm².

A density of current applied to the object and a ratio of nickel ions to iron ions in the plating solution PLS may be adjusted to control an amount of nickel in the nickel alloy layer NFL. For example, an amount of reduced nickel may increase due to an increased in amount of nickel in the plating solution PLS, or an increase in current density. Therefore, a composition of the nickel alloy layer NFL may be adjusted, e.g., minutely adjusted.

In an example embodiment, an amount of nickel in the nickel alloy layer NFL may range from ≥ 5 wt% to ≤ 70 wt%, and for example, a ratio of nickel atoms in the nickel alloy layer NFL may range from ≥ 5 wt% to ≤ 40 wt%, or from ≥ 10 wt% to ≤ 30 wt%.

In an example embodiment, an amount of iron in the nickel alloy layer NFL may range from ≥ 30 wt% to ≤ 95 wt%, and for example, a ratio of iron atoms in the nickel alloy layer NFL may range from ≥ 60 wt% to ≤ 95 wt%, or from ≥ 70 wt% to ≤ 90 wt%.

In an example embodiment, an amount (e.g., wt%) of a specific element in the nickel alloy layer NFL may be measured and calculated with X-ray photoelectron spectroscopy (XPS) or energy dispersive X-ray spectroscopy (EDS).

A speed at which the object passes through the plating bath filled with the plating solution PLS, or a traveling or transportation speed of the object, may be adjusted as desired. The adjustment in traveling speed of the object may control a thickness of the nickel alloy layer NFL formed on the seed layer CSL. In an example embodiment, the thickness of the nickel alloy layer NFL may range from ≥ 0.5 µm to ≤ 5 µm.

After the nickel alloy layer formation process S300, a post-treatment process may further be performed. The post-treatment process may include washing the composite substrate CPS in which the nickel alloy layer NFL is formed, and winding the composite substrate CPS.

The composite substrate CPS may be utilized as the negative electrode current collector 210 discussed with reference to FIG. 1, and a negative electrode coating layer 220 may be formed to manufacture a negative electrode layer 200 for an all-solid-state battery.

The negative electrode layer 200 for an all-solid-state battery, a solid electrolyte layer 300, and a positive electrode layer 100 may be stacked, e.g., sequentially stacked, to fabricate an all-solid-state battery. The solid electrolyte layer 300 may include a sulfide-based solid electrolyte discussed above.

The following describes some example embodiments and comparative examples of the present disclosure. The following example embodiments, however, are merely examples, and the present disclosure is not limited to the embodiments discussed below.

### Preparation Example

### Composite Substrate:

A wound PET film of 5 µm in thickness was prepared. A surface of the PET film was treated with tin chloride (SnCl₂), and immersed in a palladium salt (PdCl₂) solution to catalyze the surface of the PET film. The catalyzed PET film may be immersed in an electroless plating solution containing copper sulfate to form a copper thin layer (a seed layer) on opposite surfaces of the PET film. A first seed layer was formed to have a uniform thickness on a top surface of the PET film, and a second seed layer was formed to have a uniform thickness on a bottom surface of the PET film. Each of the first and second seed layers was formed to have a thickness of about 20 nm.

The PET film with the seed layers formed on opposite surfaces thereof was immersed in a plating solution containing nickel chloride, ferrous sulfate, boric acid, sodium lauryl sulfate, saccharin, and sodium chloride, and was connected to a negative electrode. A nickel-iron alloy metal plate was connected to a positive electrode and a plating process was performed. A first nickel alloy layer was formed to have a uniform thickness on a top surface of the first seed layer. Each of the first and second nickel alloy layers was formed to have a thickness of about 1 µm.

Concentrations of nickel chloride and ferrous sulfate in the plating solution were adjusted to control elemental compositions of the first and second nickel alloy layers. Composition substrates having the following elemental compositions were manufactured.
Preparation 1: Composite substrate including about 70 wt% of Ni and about 30 wt% of Fe.
Preparation 2: Composite substrate including about 50 wt% of Ni and about 50 wt% of Fe.
Preparation 3: Composite substrate including about 30 wt% of Ni and about 70 wt% of Fe.
Preparation 4: Composite substrate including about 10 wt% of Ni and about 90 wt% of Fe.
Preparation 5: Composite substrate including about 3 wt% of Ni and about 97 wt% of Fe.

### Embodiment 1

### Negative Electrode:

A negative electrode coating layer slurry was prepared by mixing in water about 86 wt% of secondary particle carbon black with a Brunauer-Emmett-Teller (BET) specific surface area of 150 m²/g, average particle diameter (D₅₀: 400 nm) including aggregated primary particles having an average particle diameter (D₅₀) of 35 nm, about 5 wt% of silver (Ag) having an average particle size of 60 nm, about 3 wt% of carboxymethyl cellulose, and about 6 wt% of styrene-butadiene rubber.

The negative electrode coating layer slurry was coated on the composite substrate prepared according to Preparation 1, and dried to manufacture a negative electrode for an all-solid-state battery.

### Solid Electrolyte Layer:

A solid electrolyte Li_{5.75}PS_{4.75}Cl_{1.25} (D₅₀: 3 µm) and an acrylic resin (A334 commercially available from Xeon) as a binder were mixed in a weight ratio of 98.5 : 1.5 to prepare a mixture. An isobutyl isobutyrate (IBIB) solvent was added to the mixture, and then stirred to prepare a composition for forming a solid electrolyte.

The composition for forming a solid electrolyte was placed on a polyethylene nonwoven fabric, while two blades with different gaps were moved, and dried at 25°C for 12 hours in the air in a dry room and vacuum dried at 70°C for 2 hours, thereby forming a solid electrolyte in the form of a sheet formed on the polyethylene nonwoven fabric.

### Positive Electrode:

A positive electrode layer slurry was prepared by mixing in an N-methyl pyrrolidone solvent about 85.0 wt% of LiNi_{0.8}Co_{0.1}Al_{0.1}O₂ as a positive electrode active material, about 13.0 wt% of Li₆PS₅Cl as an argyrodite-type solid electrolyte, about 0.5 wt% of carbon nano-tube as a conductive material, and about 1.5 wt% of polyvinylidene fluoride as a binder. The positive electrode layer slurry was coated dried at 60°C on an aluminum current collector, and a rolling process was performed to manufacture a positive electrode for an all-solid-state battery.

### All-Solid-State Half-Cell:

The negative electrode, the solid electrolyte, and a lithium metal counter electrode were stacked, e.g., sequentially stacked, and pressed at 2 Nm to fabricate an all-solid-state half-cell (torque half-cell).

### All-Solid-State Full-Cell:

The negative electrode, the solid electrolyte, and the positive electrode were stacked, e.g., sequentially stacked, and a warm isostatic press was performed for about 30 minutes at 85°C under a pressure of 500 MPa to fabricate an all-solid-state battery.

### Embodiment 2

A negative electrode, a solid electrolyte, a positive electrode, an all-solid-state half-cell, and an all-solid-state full-cell were fabricated in the same method as in Embodiment 1,with a difference that the composite substrate prepared according to Preparation 2 was used when the negative electrode for an all-solid-state battery was manufactured.

### Embodiment 3

A negative electrode, a solid electrolyte, a positive electrode, an all-solid-state half-cell, and an all-solid-state full-cell were fabricated in the same method as in Embodiment 1,with a difference that the composite substrate prepared according to Preparation 3 was used when the negative electrode for an all-solid-state battery was manufactured.

### Embodiment 4

A negative electrode, a solid electrolyte, a positive electrode, an all-solid-state half-cell, and an all-solid-state full-cell were fabricated in the same method as in Embodiment 1,with a difference that the composite substrate prepared according to Preparation 4 was used when the negative electrode for an all-solid-state battery was manufactured.

### Comparative 1

A negative electrode, a solid electrolyte, a positive electrode, an all-solid-state half-cell, and an all-solid-state full-cell were fabricated in the same method as in Embodiment 1,with a difference that the negative electrode coating layer slurry was coated and dried on a copper foil of 6.2 µm in thickness in place of the composite substrate when the negative electrode for an all-solid-state battery was manufactured.

### Comparative 2

A negative electrode, a solid electrolyte, a positive electrode, an all-solid-state half-cell, and an all-solid-state full-cell were fabricated in the same method as in Embodiment 1,with a difference that the negative electrode coating layer slurry was coated and dried on a nickel foil of 6.2 µm in thickness in place of the composite substrate when the negative electrode for an all-solid-state battery was manufactured.

### Comparative 3

A negative electrode, a solid electrolyte, a positive electrode, an all-solid-state half-cell, and an all-solid-state full-cell were fabricated in the same method as in Embodiment 1,with a difference that the composite substrate prepared according to Preparation 5 was used when the negative electrode for an all-solid-state battery was manufactured.

For example, the composite substrate was used in which the nickel alloy layer contained less than 5 wt% of nickel.

Table 1 below lists compositions of alloy layers in the composite substrates according to Embodiments and Comparatives.

**Table 1:**

| | Negative electrode current collector | Composition of first nickel alloy layer | Composition of second nickel alloy layer |
|---|---|---|---|
| Embodiment 1 | Composite substrate of | Ni: about 70 wt% | Ni: about 70 wt% |
| | Preparation 1 | Fe: about 30 wt% | Fe: about 30 wt% |
| Embodiment 2 | Composite substrate of | Ni: about 50 wt% | Ni: about 50 wt% |
| | Preparation 2 | Fe: about 50 wt% | Fe: about 50 wt% |
| Embodiment 3 | Composite substrate of Preparation 3 | Ni: about 30 wt% Fe: about 70 wt% | Ni: about 30 wt% Fe: about 70 wt% |
| Embodiment 4 | Composite substrate of Preparation 4 | Ni: about 10 wt% | Ni: about 10 wt% |
| | | Fe: about 90 wt% | Fe: about 90 wt% |
| Comparative 1 | Copper foil | - | - |
| Comparative 2 | Nickel foil | - | - |
| Comparative 3 | Composite substrate of Preparation 5 | Ni: about 3 wt% | Ni: about 3 wt% |
| | | Fe: about 97 wt% | Fe: about 97 wt% |

### Evaluation 1: Cyclic Voltammetry of Metal Substrate

Cyclic voltammetry (CV) in accordance with charge-discharge cycles was measured for all-solid-state half-cells fabricated according to Comparatives 1 and 2.

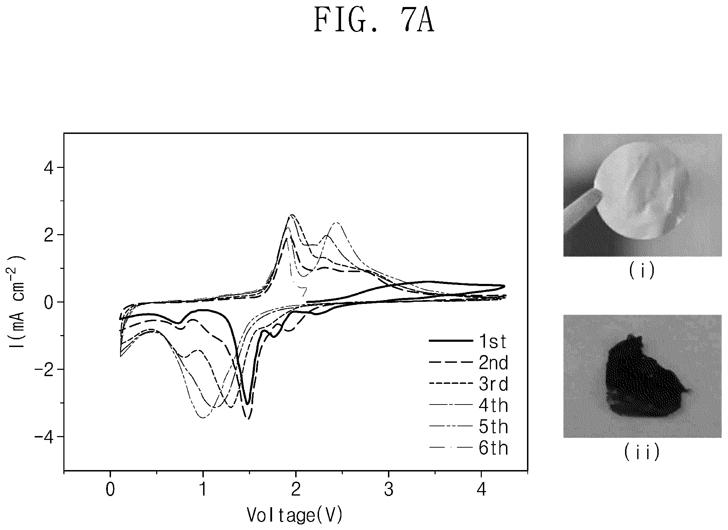

FIG. 7A shows CV results of Comparative 1 in accordance with charge-discharge cycles (first to sixth cycles). In FIG. 7A, (i) depicts an actual image of the copper foil (negative electrode current collector) before charge and discharge, and (ii) depicts an actual image of the copper foil (negative electrode current collector) after 30 charge-discharge cycles.

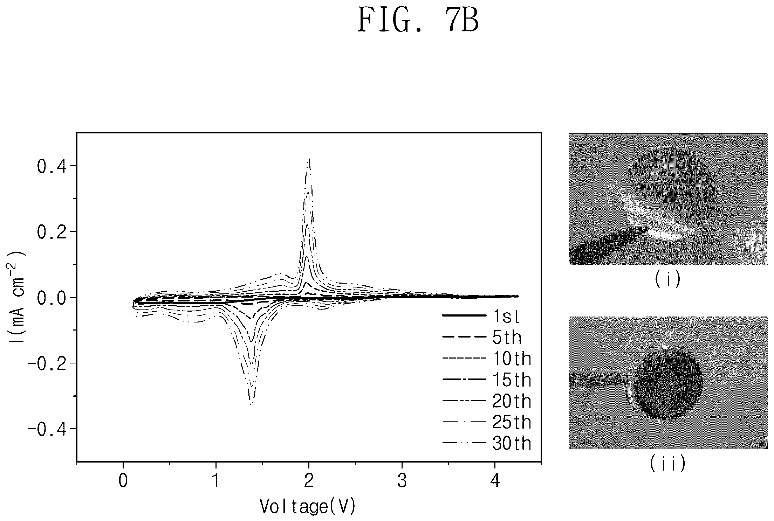

FIG. 7B shows CV results of Comparative 2 in accordance with charge-discharge cycles (first to thirtieth cycles). In FIG. 7B, (i) depicts an actual image of the nickel foil (negative electrode current collector) before charge and discharge, and (ii) depicts an actual image of the nickel foil (negative electrode current collector) after 30 charge-discharge cycles.

Referring to FIGS. 7A and 7B, it may be determined that the negative electrode current collector of Comparative 1 experiences active electrochemical side reactions during charge and discharge.

In contrast, it may be determined that the negative electrode current collector of Comparative 2 shows discoloration but has no missing parts, and the CV evaluation reveals a significant reduction in side reaction current density, indicating that the nickel substrate exhibits desired or improved resistance to sulfation compared to the copper substrate.

### Evaluation 2: Cyclic Voltammetry of Composite Substrate

Cyclic voltammetry (CV) in accordance with charge-discharge cycles was measured for all-solid-state half-cells fabricated according to Embodiments 1 to 4 and Comparatives 2 and 3.

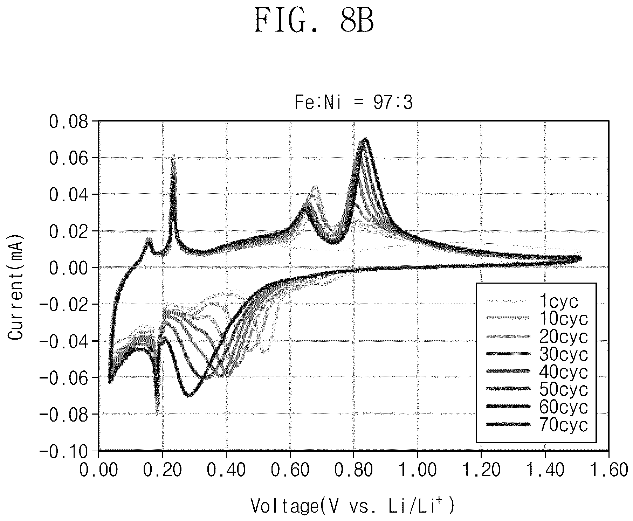

FIG. 8A shows CV results of Comparative 2 in accordance with charge-discharge cycles (first to seventh cycles). FIGS. 8B to 8F respectively show CV results of Comparative 3 and Embodiments 1 to 4 in accordance with charge-discharge cycles (first to seventieth cycles).

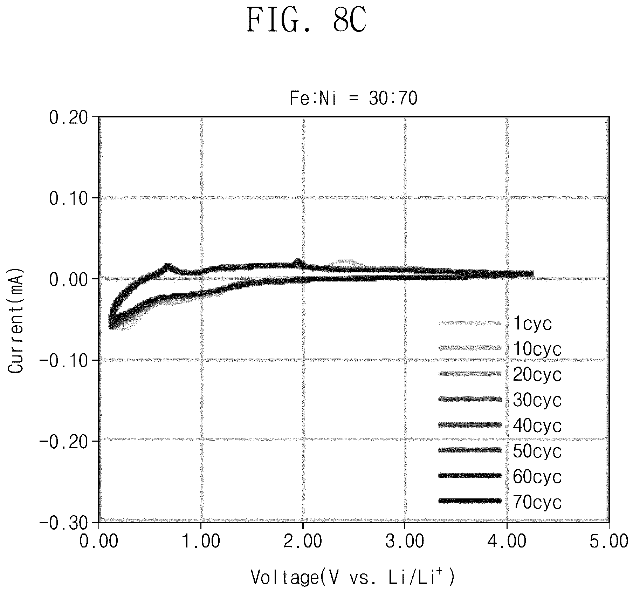

Referring to FIGS. 8A to 8F, it may be determined that each of the all-solid-state half-cells according to Comparatives 2 and 3 has a high side reaction current density, indicating that side reactions occurred actively. In contrast, referring to FIGS. 8C to 8F, it may be determined that each of the all-solid-state half-cells according to Embodiment 1 to 4 has a drastically reduced side reaction current density, and that side reactions are reduced or suppressed even after seventy or more charge-discharge cycles are performed. Accordingly, each of the composite substrates of Embodiments 1 to 4 has improved resistance to sulfation.

### Evaluation 3: Resistivity of Composite Substrate

A resistivity was measured in accordance with a composition of the nickel alloy layer of the composite substrate. Each of the negative electrodes manufactured according to Embodiments 1 to 4 was cut to a given size (e.g., Ø32). A resistance of the cut negative electrode was measured using an LCR meter, model 4249A commercially available from Agilent Technologies. Inc., and the value was converted to resistivity. The result is listed in Table 2 below.

**Table 2:**

| | Composition of nickel alloy layer | Resistivity of substrate (µΩ·cm) |
|---|---|---|
| Embodiment 1 | Ni: about 70 wt% | 26.2 |
| | Fe: about 30 wt% | |
| Embodiment 2 | Ni: about 50 wt% | 48.4 |
| | Fe: about 50 wt% | |
| Embodiment 3 | Ni: about 30 wt% | 32.7 |
| | Fe: about 70 wt% | |
| Embodiment 4 | Ni: about 10 wt% | 24.5 |
| | Fe: about 90 wt% | |

Referring to Table 2, it may be determined that the composite substrates according to Embodiments 1, 3, and 4 have relatively improved resistivity.

### Evaluation 4: Initial Discharge Capacity and High-Temperature Lifespan

Each of the all-solid-state full-cells fabricated according to some embodiments and comparative examples was charged at 0.1 C at 45°C, discharged at 0.1 C once, charged at 0.1 C, discharged at 0.33 C once, and charged at 0.1 C and discharged at 1 C once, and then charged at 0.33 C to measure a 0.33 C discharge capacity (initial discharge capacity). The result is listed in Table 3 below.

Each of the all-solid-state full-cells fabricated according to some embodiments and comparative examples was charged and discharged at 0.33 C at 45°C for 50 times to obtain a ratio of discharge capacity at 50 times to discharge capacity at one time. The result is shown as a capacity retention rate (%) in Table 3 below.

**Table 3:**

| | 0.33 C capacity (mAh/g) | Capacity retention rate (%) |
|---|---|---|
| Embodiment 1 | 158 | 89.3 |
| Embodiment 2 | 162 | 93.4 |
| Embodiment 3 | 165 | 94.5 |
| Embodiment 4 | 155 | 91.2 |
| Comparative 1 | 168 | 70.4 |
| Comparative 2 | 148 | 90.2 |
| Comparative 3 | 163 | 82 |

Referring to Table 3, it may be determined that each of the all-solid-state full-cells fabricated according to Comparatives 1 and 3 has a desired or improved initial discharge capacity, and a reduced capacity retention rate. In the case of Comparative 1, lifespan characteristics are significantly decreased due to corrosion of the copper current collector, and in the case of Comparative 3, an amount of nickel is too low to provide sufficient resistance to sulfation. Accordingly, the all-solid-state full-cell fabricated according to Comparative 2 has a poor initial discharge capacity.

In contrast, the all-solid-state full-cells fabricated according to Embodiments 1 to 4 exhibit desired or improved discharge capacity and capacity retention rate, and in particular, the all-solid-state full-cells fabricated according to Embodiments 2 and 3 have dramatically improved discharge capacity and capacity retention rate. In the case of Embodiment 1, an excessively high amount of nickel induces a reduction in thermal conductivity, and thus lifespan characteristics are slightly decreased when charge-discharge cycles are repeated at high temperatures.

A composite substrate for an all-solid-state battery and a negative electrode including the same according to the present disclosure may exhibit improved sulfation resistance against sulfide-based solid electrolytes.

An all-solid-state battery according to the present disclosure may exhibit desired or improved high-temperature lifespan characteristics and improved sulfation resistance against sulfide-based solid electrolytes.

## Claims

1. A composite substrate (CPS) for an all-solid-state battery (10), the composite substrate (CPS) comprising:
a polymer layer (POL);
a first nickel alloy layer (NFL1) on a first surface of the polymer layer (POL); and
a second nickel alloy layer (NFL2) on a second surface of the polymer layer (POL),
wherein at least one of the first and second nickel alloy layers (NFL1; NFL2) comprises a nickel-iron binary alloy.

2. The composite substrate (CPS) of claim 1, wherein an amount of nickel in the first nickel alloy layer (NFL1) is in a range of ≥ 5 wt% to ≤ 70 wt%.

3. The composite substrate (CPS) of claim 1 or 2, wherein a thickness of the first nickel alloy layer (NFL1) is in a range of ≥ 0.5 µm to ≤ 5 µm.

4. The composite substrate (CPS) of any one of claims 1 to 3, further comprising a first seed layer (CSL1) between the polymer layer (POL) and the first nickel alloy layer (NFL1).

5. The composite substrate (CPS) of claim 4, wherein the first seed layer (CSL1) comprises at least one of copper, palladium, nickel, gold, chromium, and silver.

6. The composite substrate (CPS) of claim 4 or 5, wherein a thickness of the first seed layer (CSL1) is in a range of ≥ 1 nm to ≤ 100 nm.

7. A negative electrode for an all-solid-state battery (10), the negative electrode comprising:
a composite substrate (CPS); and
a negative electrode coating layer (220) on the composite substrate (CPS),
wherein the composite substrate (CPS) comprises:
a polymer layer (POL); and
a first nickel alloy layer (NFL1) on the polymer layer (POL), and
wherein the first nickel alloy layer (NFL1) comprises a nickel-iron binary alloy.

8. The negative electrode of claim 7, wherein an amount of nickel in the first nickel alloy layer (NFL1) is in a range of ≥ 5 wt% to ≤ 70 wt%.

9. The negative electrode of claim 7 or 8, wherein a thickness of the first nickel alloy layer (NFL1) is in a range of ≥ 0.5 µm to ≤ 5 µm.

10. The negative electrode according to any one of claims 7 to 9, further comprising a first seed layer (CSL1) between the polymer layer (POL) and the first nickel alloy layer (NFL1).

11. The negative electrode of claim 10, wherein the first seed layer (CSL1) comprises at least one of copper, palladium, nickel, gold, chromium, and silver.

12. The negative electrode of claim 10 or 11, wherein a thickness of the first seed layer (CSL1) is in a range of ≥ 1 nm to ≤ 100 nm.

13. An all-solid-state battery (10), comprising:
a negative electrode layer (200) that comprises a composite substrate (CPS) and a negative electrode coating layer (220) on the composite substrate (CPS);
a solid electrolyte layer (300) on the negative electrode layer (200); and
a positive electrode layer (100) on the solid electrolyte layer (300),
wherein the composite substrate (CPS) comprises:
a polymer layer (POL); and
a first nickel alloy layer (NFL1) on the polymer layer (POL), and
wherein the first nickel alloy layer (NFL1) comprises a nickel-iron binary alloy.

14. The all-solid-state battery (10) of claim 13, wherein an amount of nickel in the first nickel alloy layer (NFL1) is in a range of ≥ 5 wt% to ≤ 40 wt%.

15. The all-solid-state battery (10) of claim 13 or 14, further comprising a first seed layer (CSL1) between the polymer layer (POL) and the first nickel alloy layer (NFL1).
